# EUROPÄISCHE PATENTANMELDUNG

(11) **EP 2 529 924 A1**
(43) Veröffentlichungstag der Anmeldung: **05.12.2012**
(21) Anmeldenummer: 12166438.7
(22) Anmeldetag: 02.05.2012
(51) Int. Cl.: B32B 13/10, E04C 2/04, E04C 2/06, C04B 28/04, B63B 3/02, B63B 5/18

(54) **Verbundwerkstoff aus hochfesten bzw. ultrahochfesten Beton sowie Verfahren zu dessen Herstellung. Verbundbauteil aus einem derartigen Verbundwerkstoff, sowie Schwimmkörper und impaktresistente Schichtbetonkonstruktion daraus.**

(30) Priorität: 13.05.2011 DE 102011101448
(71) Anmelder: Dyckerhoff AG, 65203 Wiesbaden (DE)
(72) Erfinder: Deuse, Thomas, 63075 Offenbach (DE); Ritter, Walter, 65388 Schlangenbad (DE); Winzer, Reinhard, Dr., 65232 Taunusstein (DE)
(74) Vertreter: Solf, Alexander

(57) **Zusammenfassung**

Die Erfindung betrifft einen Verbundwerkstoff aus mehreren, insbesondere zumindest drei, miteinander fest verbundenen Einzelbauteilen (2) aus hochfestem oder ultrahochfestem Festbeton mit einer Zylinderdruckfestigkeit nach DIN EN 12390 ≥ 55 N/mm², wobei die Einzelbauteile (2) miteinander mittels eines Klebstoffes (3) verklebt sind sowie ein Verfahren zu dessen Herstellung, Verbundbauteil (1) aus einem derartigen Verbundwerkstoff, sowie Schwimmkörper, impaktresistente Schichtbetonkonstruktion und Bauelement daraus.

## Beschreibung

Die vorliegende Erfindung betrifft einen Verbundwerkstoff aus mehreren bzw. zumindest zwei, insbesondere zumindest drei, miteinander fest verbundenen Einzelbauteilen, die miteinander verklebt sind, sowie aus einem derartigen Verbundwerkstoff ausgebildete Bauteile. Zudem betriff die Erfindung einen Schwimmkörper, der zumindest ein derartiges Verbundbauteil aufweist. Die Erfindung betrifft außerdem ein Verfahren zur Herstellung des Verbundwerstoffes.

Unter einem Verbundwerkstoff oder Kompositwerkstoff versteht man einen Werkstoff aus zwei oder mehr verbundenen Materialien. Infolgedessen besitzt ein Verbundwerkstoff andere Werkstoffeigenschaften als seine einzelnen Komponenten. Für die Eigenschaften der Verbundwerkstoffe sind stoffliche Eigenschaften und Geometrie der Komponenten von Bedeutung. Die Verbindung erfolgt durch Stoff- oder Formschluss oder eine Kombination von beidem. Nach der Geometrie des Verbunds können Verbundwerkstoffe z.B. unterteilt werden in Teilchenverbundwerkstoffe (Dispersionswerkstoffe), Faserverbundwerkstoffe, Schichtverbundwerkstoffe und Durchdringungsverbundwerkstoffe.

Ein Beispiel eines klassischen Schichtverbundwerkstoffes ist Brettschichtholz, welches aus mindestens drei breitseitig, faserparallel miteinander verleimten Brettern besteht.

Festbeton ist ein hydraulisch erhärtetes Gemisch aus Zement, Gesteinskörnung und Anmachwasser. Zudem können Betonzusatzstoffe und Betonzusatzmittel enthalten sein. Bei hochfestem Beton nach DIN EN 206 handelt es sich um Festbeton mit einer Zylinderdruckfestigkeit ≥ 55 N/mm² gemäß DIN EN 12390. Die hohe Zylinderdruckfestigkeit wird zum einen durch einen geringen w/z-Wert (Wasserzementwert) des Frischbetons erreicht, der insbesondere bei 0,20 - 0,35 liegt. Um die Verarbeitbarkeit zu gewährleisten, werden dem Frischbeton zudem Hochleistungs-Fließmittel zugegeben. Des Weiteren enthält hochfester Beton in der Regel feinteilige Puzzolane. Die sehr feinen Partikel der Puzzolane füllen zum einen den Porenraum zwischen den Zementkörnern aus und führen so zu einer physikalischen Packungsdichteotimierung und dadurch zu einem dichteren Gefüge. Zum anderen findet eine chemische Packungsdichteotimierung durch eine puzzolanische Reaktion zwischen dem bei der Zementhydratation entstehenden Ca(OH)₂. und den Puzzolanen statt, wobei zusätzliche CSH (Calciumsilikathydrat)-Phasen gebildet werden. Dies führt zu einer zusätzlichen Festigkeitssteigerung, da die CSH-Phasen eine höhere Festigkeit als das Ca(OH)₂ aufweisen. Insbesondere wird dadurch die Mikrostruktur in der Kontaktzone zwischen Zementstein und Zuschlag verbessert.

Ultrahochfester Beton oder auch "Ultra High Performance Concrete (UHPC)" ist Festbeton mit einer Druckfestigkeit oberhalb der in DIN EN 206 definierten Festigkeitsklasse C 100/115. Diese hohen Druckfestigkeiten werden u.a. durch einen sehr geringen w/z-Wert des Frischbetons erzielt, der bei ca. w/z = 0,2 liegt. Zudem wird bei ultrahochfestem Beton eine sehr hohe Packungsdichte angestrebt. Um das Gefüge weiter zu verdichten, wird ultrahochfester Beton in der Regel einer Wärmebehandlung unterzogen. Dadurch sind Druckfestigkeiten im Bereich von 200 N/mm² und Biegezugfestigkeiten von deutlich mehr als 20 N/mm² möglich.

Strukturen aus hochfestem oder ultrahochfestem Beton weisen aufgrund reduzierter Querschnitte im Vergleich zu Strukturen aus Normalbeton deutlich geringere Eigenlasten auf. Infolge der hervorragenden Festigkeitseigenschaften eignet sich hochfester und ultrahochfester Beton sehr gut zur Herstellung von hochtragfähigen und gleichzeitig schlanken, filigranen Bauteilen. Aufgrund des dichten Gefüges, ist auch die Korrosionsbeständigkeit verbessert, da Flüssigkeiten und Gase nicht so leicht eindringen können. Ultrahochfester Beton wird zum Beispiel aus diesem Grund für die Konstruktion von Bohrinseln eingesetzt.

Problematisch bei hochfestem und ultrahochfestem Beton ist allerdings, dass er sehr spröde ist, was z.B. durch die Zugabe von großen Mengen an Stahlfasern oder Kunststofffasern zum Frischbeton teilweise kompensiert wird. Dies erschwert aber die Verarbeitbarkeit der Frischbetonmasse. Darüber hinaus lassen sich flächige Bauteile durch Gewebe aus Kohlenstoff-, Glas- bzw. Kunststofffasern verstärken. Vor dem vollständigen Versagen treten in jedem Fall Risse auf, die Einfluss auf die Maßhaltigkeit des Bauteils haben und ggf. die Dichtheit gegenüber Flüssigkeiten herabsetzen.

Aufgabe der vorliegenden Erfindung ist die Bereitstellung eines Werkstoffes, mit guten mechanischen Eigenschaften bei verhältnismäßig geringem Eigengewicht, der zudem einen hohen Widerstand gegen aggressive Medien aufweist, sowie eines Verfahrens zu dessen Herstellung.

Weitere Aufgaben der Erfindung sind die Bereitstellung eines aus einem derartigen Werkstoff ausgebildeten Verbundbauteils sowie eines Schwimmkörpers, einer impaktresistenten Schichtbetonkonstruktion und eines Bauelements mit Vakuumkammern zu Isolatianszwecken und/oder mit Ver- bzw. Entsorgungskanälen, jeweils aus derartigen Verbundbauteilen.

Diese Aufgaben werden durch einen Verbundwerkstoff bzw. Kompositwerkstoff nach Anspruch 1, ein Verbundbauteil nach Anspruch 13 und einen Schwimmkörper nach Anspruch 18, eine impaktresistente Schichtbetonkonstruktion nach Anspruch 19 und ein Bauelement nach Anspruch 20 sowie ein Verfahren nach Anspruch 21 gelöst. Vorteilhafte Weiterbildungen der Erfindung sind in den sich jeweils anschließenden Unteransprüchen gekennzeichnet.

Der Erfindung liegt der Gedanke zugrunde, die hervorragenden Festigkeitseigenschaften von hochfestem bzw. ultrahochfestem Zementbeton auszunutzen und gleichzeitig dessen nachteilige Eigenschaften, wie Sprödigkeit und Schlagempfindlichkeit zu kompensieren. Dies ist erfindungsgemäß durch die Schaffung eines Verbundwerkstoffes gelungen, der mehrere, bevorzugt zumindest drei, miteinander fest verbundene Einzelbauteile aus hochfestem oder ultrahochfestem Festbeton mit einer Zylinderdruckfestigkeit nach DIN EN 12390 ≥ 55 N/mm², aufweist, wobei die Einzelbauteile miteinander mittels eines Klebstoffes verklebt sind. Bevorzugt liegt die Zylinderdruckfestigkeit nach DIN EN 12390 bei ≥ 100 N/mm², insbesondere bei ≥ 130 N/mm². Die Biegezugfestigkeit nach DIN EN 12390 des Betons der Einzelbauteile liegt vorzugsweise bei ≥ 5 N/mm², bevorzugt bei 10 bis 30 N/mm². Der E-Modul des Betons der Einzelbauteile liegt vorzugsweise bei 40.000 bis.60.000 N/mm²; bevorzugt 45.000 bis 55.000 N/mm² nach DIN EN 12390.

Dabei müssen die Festigkeitskennwerte der einzelnen Einzelbauteile nicht alle gleich sein. Insbesondere können die einzelnen Einzelbauteile planmäßig ein unterschiedliches Festigkeitsniveau zur Erzielung besonderer mechanischer Effekte im Gesamtsystem aufweisen.

Im Rahmen der Erfindung wurde heraus gefunden, dass die Sprödigkeit von hochfestem und ultrahochfestem Beton durch Herstellung eines erfindungsgemäßen Verbundwerkstoffes aus miteinander verklebten Einzelbauteilen aus hochfestem oder ultrahochfestem, hydraulisch erhärtetem Beton deutlich herab gesenkt werden kann. Der erfindungsgemäße Verbundwerkstoff weist insbesondere eine deutlich höhere Duktilität und eine höhere Zugfestigkeit im Vergleich zu reinem hochfestem und ultrahochfestem Beton auf. Dennoch weist der erfindungsgemäße Verbundwerkstoff bei geringem Eigengewicht eine hervorragende Druckfestigkeit auf. Insbesondere liegt die Dichte des erfindungsgemäßen Verbundwerkstoffes bei 2,31 bis 2,49 g/cm³. Dadurch eröffnen sich vielfältige neue Anwendungsmöglichkeiten, auf die weiter unten im Einzelnen eingegangen wird.

Die Herstellung des erfindungsgemäßen Verbundwerkstoffes ist insbesondere deshalb möglich, da die Einzelbauteile aus hochfestem und ultrahochfestem

Festbeton aufgrund ihres dichten Gefüges eine deutlich höhere Oberflächenfestigkeit als Bauteile aus konventionellem Beton aufweisen. Klebeverbindungen von Bauteilen aus konventionellem Beton versagen nämlich bei üblichen Haftzugversuchen meist durch Kohäsionsbruch in der Betonrandzone. Bei hochfestem und ultrahochfesten Beton sinkt das Kohäsionsversagen in der Betonrandszone drastisch, so dass eine Kraftübertragung zwischen den Einzelbauteilen und dem Klebstoff überhaupt erst möglich wird. Überraschend ist zudem, dass der in monolithischer Form spröde hochfeste oder ultrahochfeste Beton in dem erfindungsgemäßen Verbundwerkstoff moderate Verformungen ohne Risse übersteht. Damit können auftretende Spannungen besser abgebaut werden.

Bei dem erfindungsgemäßen hochfesten bzw. ultrahochfesten Festbeton der Einzelbauteile handelt es sich um einen hydraulisch erhärteten Zementbeton, also ein hydraulisch erhärtetes Gemisch aus Zement, Gesfeinskörnung, Anmachwasser, Betonzusatzmitteln, insbesondere Hochleistungsfließmitteln in Form von Polycarboxylaten, und bevorzugt Betonzusatzstoffen. Der Festbeton weist also eine Matrix aus Zementstein bzw. Bindemittelstein auf, in die die Gesteinskörnung und gegebenenfalls die inerten bzw. nicht reagierten Betonzusatzstoffe und gegebenenfalls die nicht vollständig hydratisierten Zementkörner eingebettet sind. Bevorzugt handelt es sich bei den Zusatzstoffen um feinteilige Puzzolane und/oder kurze oder endlose Fasern und/oder Fasergemische und/oder Fasergewirke. Bei den Fasern handelt es sich vorzugsweise um Glas- und/oder Stahl- und/oder Kohlenstoff- und/oder Kunststofffasern und/oder Textilfasern. Zudem können die Einzelbauteile in an sich bekannter Weise wärmebehandelt sein.

Zudem kann der erfindungsgemäße Festbeton eine Bewehrung, z.B. aus Filamenten, Garnen, Drähten, Geweben und/oder Stäben enthalten. Beispielsweise kann der Festbeton eine Bewehrung in Form von einer oder mehreren Gewebe-und/oder Gewirkelagen z.B. aus Glas- und/oder Metall- und/oder Kunststoff- und/oder Kohlenstofffasern und/oder in Form von Metall- und/oder Kunststoff= und/oder Glas- und/oder Kohlenstoffeinzelfasern oder -filamenten (nicht dargestellt) aufweisen.

insbesondere handelt es sich bei dem erfindungsgemäßen hochfesten bzw. ultrahochfesten Festbeton um einen hydraulisch erhärteten Beton, hergestellt unter Verwendung eines mineralischen, hydraulisch erhärtenden Bindemittels gemäß der europäischen Patentanmeldung EP 2 030 956 A9, auf deren Inhalt hiermit vollinhaltlich Bezug genommen wird. Bei diesem Bindemittel handelt es sich um ein mineralisches, hydraulisches Bindemittel auf Basis von zumindest einem Zement, wobei der Zement Klinkerphasen wie insbesondere C₃S, C₂S, C₃A, C₄AF sowie ggf. Nebenbestandteile aufweist, die mit Wasser zu Zementstein erhärtende Hydratphasen, insbesondere Calciumsilikathydratphasen bilden, und wobei der Zement nach dem Anmachen mit Wasser eine Ruhephase von mindestens 6 bis 8 Stunden aufweist, in der keine beachtlichen Erhärtungsreaktionen stattfinden. Zudem weist das Bindemittel zusätzlich mindestens eine feinteilige SiO₂-Komponente und mindestens eine feinteilige CaO-Komponente auf, die mit Anmachwasser während der Ruhephase aufgrund einer puzzolanischen Reaktion erhärtende, eine Frühfestigkeit bewirkende Calciumsilikathydratphasen bilden.

Der Zement des Bindemittels ist beispielsweise ein genormter Zement nach DIN EN 197-1 und/oder DIN 1164 und weist eine normale Feinheit mit Korngrößen d₉₅ zwischen 20 und 70 µm sowie spezifische Oberflächen zwischen 0,3 und 0,8 m²/g (BET) auf. Beispielsweise handelt es sich um einen Portlandzement oder Portlandkompositzement oder einen Hochofenzement. Alternativ dazu kann es sich aber auch um einen nicht genormten Zement handeln, der Portlandzementklinker und zusätzlich mehr als zwei andere, beliebige Hauptbestandteile (Kompositbestandteile) gemäß DIN EN 197-1 aufweist, wobei die Gesamtmenge der anderen Hauptbestandteile > 35 Gew.% sein kann. Bevorzugte Zusammensetzungen des Bindemittels sind in nachstehender Tabelle angegeben:

| **Beispiel 1** | **Beispiel 2** | **Beispiel 3** |
|---|---|---|
| 75 % CEM I 52,5 R | 52 % CEM I 52,5 R | 44 % CEM I 52,5 R |
| 20 % Hüttensendfeinmehl | 13 % Hüttensandfeinmehl | 99 % Hüttensandfeinmehl |
| | 15 % Kalksteinmehl | 20 % Kalksteinmehl |
| | 15 % Steinkohlenfluqasche | 20 % Steinkohlenflugasche |
| 5 % Mischung aus feinteiliger SiO₂-Komponent und feinteiliger CaO-Komponente | 5 % Mischung aus feinteiliger SiO₂-Komponente und feinteiliger CaO-Komponente | 5 % Mischung aus feinteiliger SiO₂-Komponente und feinteiliger CaO-Komponente |

Infolgedessen weist der erfindungsgemäße Festbeton eine Zementsteinmatrix bzw. Bindemittelsteinmatrix auf, die sowohl Calciumsilikathydratphasen, die aus der Hydratation der Klinkerphasen C₃S und C₂S resultieren als auch Calciumsilikathydratphasen aufweist, die aus der puzzolanischen Reaktion der feinteiligen SiO₂-Komponente mit der feinteiligen CaO-Komponente und mit dem während der Hydratation der Klinkerphasen gebildeten Ca(OH)₂ resultieren. Dadurch weist der Festbeton ein sehr dichtes Gefüge auf.

Bei dem erfindungsgemäßen Kleber bzw. Klebstoff handelt es sich vorzugsweise um einen organischen Klebstoff, also einen Klebstoff auf Basis von organischen Verbindungen. Bevorzugt ist der organische Klebstoff ein chemisch erhärtender Klebstoff, vorzugsweise ein Polyadditionsklebstoff, insbesondere ein Reaktionsharzklebstoff wie Epoxid- oder Polyurethanharz. Geeignet sind vorgenannte Reaktionsharzklebstoffe auch als Reaktionsharzmörtel, d.h mit Füllstoffen.

Alternativ dazu kann es sich bei dem Klebstoff auch um einen anorganischen Klebstoff, bevorzugt einen Silikon-Klebstoff, also einen Klebstoff auf Basis von Silikonen handeln.

Der anorganische Klebstoff kann aber auch ein mineralischer, hydraulisch abbindender Klebstoff sein. Bevorzugt handelt es sich um einen Klebstoff auf Zementbasis, der insbesondere polymermodifiziert ist, also Zuschlagstoffe aus Polymeren aufweist.

Alternativ dazu handelt es sich um einen Zement in Verbindung mit einem Dispersionsklebstoff, In diesem Fall ist der Klebstoffe ein Klebstoff sowohl auf organischer als auch anorganischer Basis bzw. eine Mischung aus einem organischen und anorganischen Klebstoff.

Unabhängig davon, ob es sich um einen organischen oder anorganischen Klebstoff oder eine Mischung daraus handelt, kann es sich bei dem Klebstoff grundsätzlich um einen Polyadditionsklebstoff und/oder Pölykondensationsklebstoff und/oder Polymerisationsklebstoff und/oder einen physikalisch abbindenden Klebstoff handeln.

Die organischen Klebstoffe und die Silikon-Klebstoffe haben den Vorteil, dass sie einen geringeren E-Modul als mineralische Klebstoffe aufweisen. Insbesondere liegt der E-Modul des erfindungsgemäß verwendeten Klebstoffes bei 500 bis 15.000 N/mm², bevorzugt 3.000 bis 5.000 N/mm².

Die Zugfestigkeit des Klebstoffs sollte höher als die des Hochleistungsbetons sein, um einen Abriss in der Klebfuge auszuschließen. Geeignete Zugfestigkeiten liegen zwischen 15 und 35 N/mm² bevorzugt 25 bis 30 N/mm².

Im Folgenden wird die Erfindung anhand einer Zeichnung beispielhaft näher erläutert. Es zeigen:
- Figur 1:: Eine schematische Seitenansicht einer erfindungsgemäßen Platte aus dem erfindungsgemäßen Werkstoff
- Figur 2:: Eine schematische Seitenansicht einer erfindungsgemäßen Bauplatte aus dem erfindungsgemäßen Werkstoff nach einer weiteren Ausführungsform
- Figur 3:: Einen schematischen Querschnitt einer Stütze aus dem erfindungsgemäßen Werkstoff
- Figur 4:: Eine schematische stirnseitige Ansicht eines Balkens aus dem erfindungsgemäßen Werkstoff

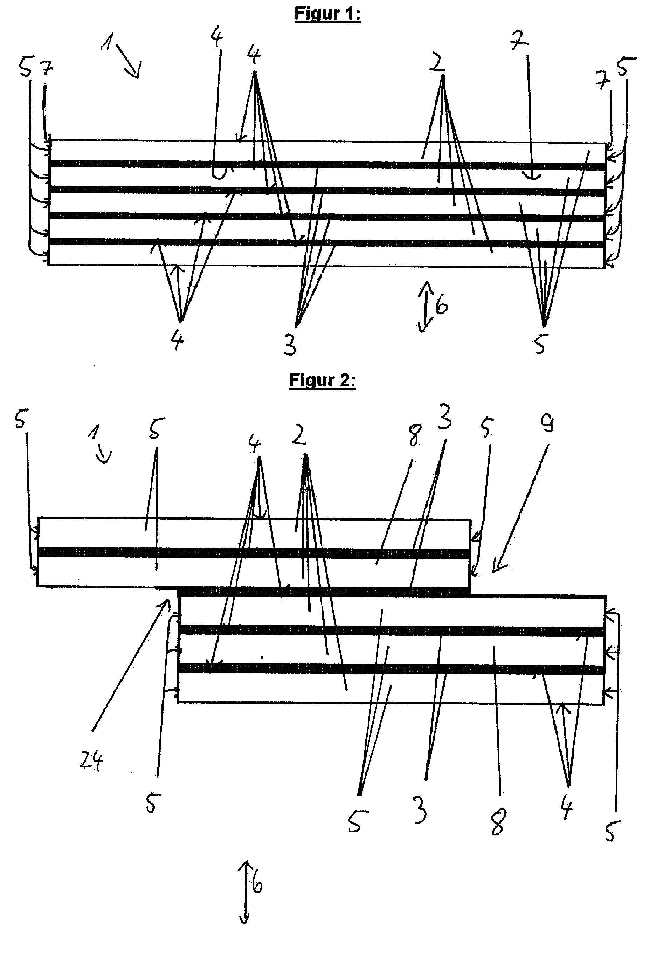

Nach einer ersten Ausführungsform (Fig. 1) der Erfindung handelt es sich bei dem erfindungsgemäßen Verbundbauteil um ein Schichtverbundbauteil, insbesondere um eine Verbundplatte 1 aus einem Schichtverbundwerkstoff, der als Einzelbetonbauteile einzelne Platten bzw. Einzelbetonplatten bzw. Einzelplatten 2 aufweist. Die mehrlagige bzw. mehrschichtige Verbundplatte 1 besteht somit aus mehreren, insbesondere mehr als drei, miteinander flächig verbundenen Einzelplatten 2, die mittels einer dazwischen liegenden Klebstoffschicht bzw. Klebstomage 3 miteinander verklebt sind. Insbesondere sind die Einzelplatten 2 in eine Plattendickenrichtung 6 der Verbundplatten 1 gesehen benachbart zueinander angeordnet.

Die Einzelplatten 2 weisen jeweils zwei sich gegenüberliegende, vorzugsweise zur Plattendickenrichtung 6 senkrechte, Plattenoberflächen bzw. Plattenbreitseiten 4 und vier, insbesondere zu den Plattenbreitseiten 4 senkrechte, Plattenseitenkanten 5 auf. Die aneinander paarweise angrenzenden Plattenseitenkanten 5 sind jeweils bevorzugt senkrecht zueinander, so dass die Einzelplatten 2 quaderförmig ausgebildet sind. Selbstverständlich können die Einzelplatten 2 aber auch andere Formen aufweisen.

Die Einzelplatten 2 sind breitseitig miteinander verklebt. Das heißt, zwischen je zwei in Plattendickenrichtung 6 zueinander benachbarten Einzelplatten 2 ist jeweils eine Klebeschicht 3 vorhanden. Die Klebeschichten 3 können zudem bewehrt bzw. armiert sein. Beispielsweise können die Klebeschichten 3 eine Bewehrung in Form von einer oder mehreren Gewebe-und/Oder Gewirkelagen z.B. aus Glas- und/oder Metall- und/oder Kunststoff- und/oder Kohlenstofffasern oder in Form von Metall- und/oder Kunststoff- und/oder Glas- und/oder Kohlenstofieinzelfasern oder -filamenten (nicht, dargestellt) aufweisen.

Die Dicke der Verbundplatte 1, also deren Erstreckung in Plattendickenrichtung 6, beträgt vorzugsweise 20 bis 500 mm, bevorzugt 30 bis 200 mm. Die Dicke der Einzelplatten 2, also deren Erstreckung in Plattendickenrichtung 6, beträgt vorzugsweise 5 bis 50 mm, bevorzugt 10 bis 30 mm. Dabei müssen die Einzelplatten 2 einer Verbundplatte 1 nicht alle dieselbe Dicke aufweisen, dies ist aber bevorzugt.

Die Einzelplatten 2 können wie oben bezüglich der Einzelbauteile angegeben bewehrt sein.

Zudem sind die Einzelplatten 2 gemäß der ersten Ausführungsform (Fig. 1) derart angeordnet, dass ihre Plattenseifienkanten 5 jeweils bündig miteinander abschließen und vier durchgehende Plattenkantenflächen 7 der Verbundplatte 1 bilden. Die Plattenkantenflächen 7 sind paarweise zueinander senkrecht.

Nach einer weiteren Ausführungsform der Erfindung (Fig. 2) schließen nicht alle Plattenseitenkanten 5 jeweils bündig miteinander ab. Beispielsweise weist die Verbundplatte 1 zwei aus jeweils mehreren Einzelplatten 2 gebildete Plattenelemente 8 auf, wobei die jeweils zueinander parallelen Plattenseitenkanten 5 der einzelnen Plattenelemente 8 jeweils bündig miteinander abschließen. Die Plattenseitenkanten 5 des einen Plattenelements 8 schließen allerdings nicht bündig mit den Plattenseitenkanten 5 des anderen Plattenelements 8 ab, sondern sind in eine zu den jeweiligen Plattenseitenkanten 5 senkrechte Richtung zueinander versetzt angeordnet. Dadurch werden Stufenabsätze 24 gebildet, die die Montage mehrerer erfindungsgemäßer Verbundplatten 1 erleichtern. In gleicher Weise können z.B. durch geeigneten Versatz der Einzelplatten 2 Nut-/Feder-Profile ausgebildet werden.

Im Rahmen der Erfindung liegt es zudem auch, Einzelplatten 2 unterschiedlicher Geometrien miteinander zu kombinieren, wobei eine Verbundplatte 1 vorzugsweise aus raumformmäßig identischen Einzelplatten 2 besteht.

Für die Verklebung der Einzelplatten 2 miteinander ist besonders ein zweikomponentiger Epoxidharz-Klebstoff geeignet, der nach dem Anmischen eine ausreichend lange Topfzeit aufweist, um z.B. eine großflächige Einzelplatte 2 dünn zu beschichten und die nächste Einzelplatte 2 in den frischen Klebstoff einzulegen. Der Vorgang wird dann bis zum Erreichen der konstruktiv erforderlichen Plattendicke der herzustellenden Verbundplatte 1 wiederholt. Nach Aushärtung des Klebstoffs kann die Verbundplatte - falls erforderlich - weiter bearbeitet werden.

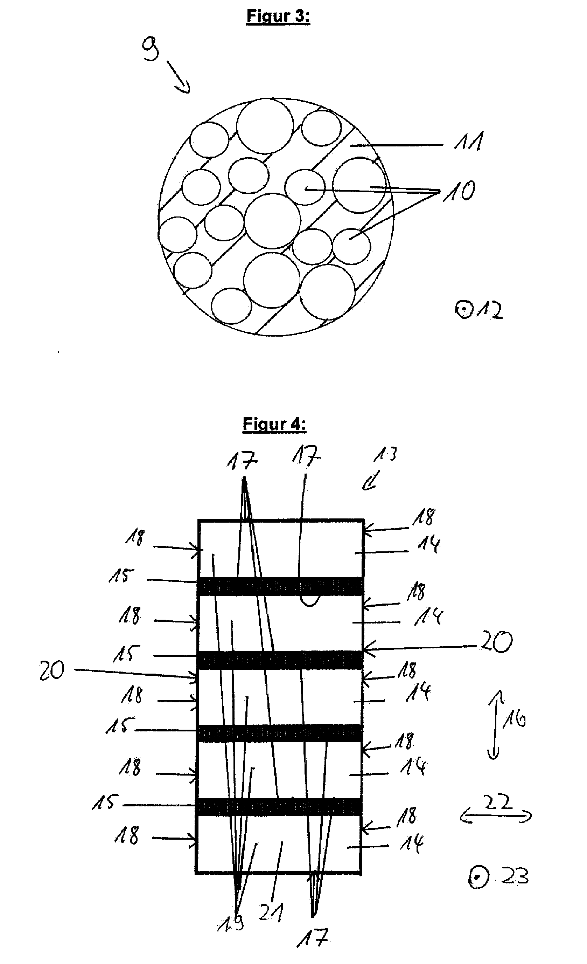

Gemäß einer weiteren Ausführungsform der Erfindung (Fig. 3) handelt es sich bei dem erfindungsgemäßen Verbundbauteil um einen Stab oder eine Stütze 9 aus einem Verbundwerkstoff, die bzw. der als Einzelbauteile einzelne Stäbe bzw. Einzelstäbe 10 aufweist, die in einer Klebstoffmatrix 11 eingebettet sind. Die Stütze 9 weist eine Längserstreckung in Richtung einer Stützenlängsrichtung 12 auf, wobei die Einzelstäbe 10 zueinander parallel sind und ebenfalls eine Längserstreckung in Stützenlängsrichtung 12 aufweisen. Außerdem weisen sowohl die Stütze 9 als auch die Einzelstäbe 10 z.B. einen kreisrunden Querschnitt auf (Fig. 3). Andere Querschnittsformen, z.B. ein rechteckiger Querschnitt, sind ebenfalls möglich. Derartige Stützen können beispielsweise als Meterware geliefert, vor Ort auf die erforderliche Länge geschnitten und eingebaut werden.

Dabei müssen die Einzelstäbe 10 einer Stütze 9 nicht alle denselben Durchmesser aufweisen, dies ist aber bevorzugt. Die Einzelstäbe 10 erstrecken sich zudem bevorzugt über die gesamte Länge der Stütze 9.

Nach einer weiteren Ausführungsform (Fig. 4) der Erfindung handelt es sich bei dem erfindungsgemäßen Verbundbauteil um ein weiteres Schichtverbundbauteil, insbesondere um einen Verbundbalken 13 aus einem Schichtverbundwerkstoff, der als Einzeibetonbauteile einzelne Bretter bzw. bzw. Einzelbetonbretter bzw. Einzelbretter 14 aufweist. Der Verbundbalken 13 besteht somit aus mehreren, insbesondere mehr als drei, miteinander flächig verbundenen Einzelbrettern 14, die mittels einer dazwischen liegenden Klebstoffschicht bzw. Klebstoftlage 15 miteinander verklebt sind. Insbesondere sind die Einzelbretter 14 in eine Balkenhöhenrichtung 16 des Verbundbalkens 13 gesehen benachbart zueinander bzw. übereinander angeordnet.

Die Einzelbretter 14 weisen jeweils zwei sich gegenüberliegende, vorzugsweise zur Balkenhöhenrichtung 16 senkrechte, Brettoberflächen bzw. Brettbreitseiten 17, zwei zu den Brettbreitseiten 17 senkrechte Brettlängskanten 18 und zwei zu den Brettbreitseiten 17 und den Brettlängskanten 18 senkrechte Brettstirnkanten 19 auf. Die Einzelbretter 14 sind breitseitig miteinander verklebt. Das heißt, zwischen je zwei in Balkenhöhenrichtung 16 zueinander benachbarten Einzelbrettern 14 ist jeweils eine Klebstoffschicht 15 vorhanden. Die Klebstoffschichten 15 können zudem wiederum bewehrt bzw. armiert sein. Beispielsweise können die Klebstoffschichten 15 ebenfalls eine Bewehrung in Form von einer oder mehreren Gewebe- oder Gewirkelagen oder in Form von Glas- und/oder Kohlenstoff- und/oder Metall- und/oder Kunststoffeinzelfasern oder -filamenten (nicht dargestellt) aufweisen.

Zudem sind die Einzelbretter 14 vorzugsweise derart angeordnet, dass ihre Brettlängskanten 18 und ihre Brettstirnkanten 19 jeweils bündig miteinander abschließen und zwei durchgehende, zueinander parallele Balkenseitenflächen 20 und zwei durchgehende, zu den Balkenseitenflächen 20 senkrechte Balkenstirnflächen 21 bilden. Eine versetzte Anordnung der Einzelbretter 14 zueinander, bei der die Brettlängskanten 18 und/oder die Brettstirnkanten 19 jeweils nicht bündig miteinander abschließen sondern zueinander versetzt sind (z.B. analog zu Fig. 2) ist aber auch möglich. Dies kann z.B. die Montage erleichtern.

Die Einzelbretter 14 können wie oben bezüglich der Einzelbauteile angegeben bewehrt sein.

Die Höhe der Verbundbalkens 13, also dessen Erstreckung in Balkenhöhenrichtung 16, beträgt vorzugsweise 20 bis 1000 mm, bevorzugt 50 bis 500 mm. Die Breite des Verbundbalkens 13, also dessen Erstreckung in eine zu den Balkenstirnflächen 21 parallele und zur Balkenhöhenrichtung 16 senkrechte Balkenbreitenrichtung 22, beträgt vorzugsweise 20 bis 500 mm, bevorzugt 50 bis 300 mm. Die Länge des Verbundbalkens 13, also dessen Erstreckung in eine zu den Balkenseitenflächen 20 parallele und zur Balkenhöhenrichtung 16 senkrechte Balkenlängsrichtung 23, richtet sich nach der Bemessung in Abhängigkeit von der Balkenhöhe.

Die Dicke bzw. Höhe der Einzelbretter 14, also deren Erstreckung in Balkenhöhenrichtung 16, beträgt vorzugsweise 5 bis 50 mm, bevorzugt 10 bis 30 mm. Die Breite der Einzelbretter 14, also deren Erstreckung in Balkenbreitenrichtung 22, beträgt vorzugsweise 20 bis 500 mm, bevorzugt 50 bis 300 mm. Die Länge der Einzelbretter 14, also deren Erstreckung in Balkenlängsrichtung 23, beträgt vorzugsweise 500 bis 12.000 mm, bevorzugt 2.000 bis 6.000 mm. Dabei müssen die Einzelbretter 14 eines Verbundbalkens 13 nicht alle dieselben Abmessungen aufweisen, dies ist aber bevorzugt.

Die Herstellung des Verbundbalkens 13 kann auch durch Sägen ausreichend hoher mehrlagiger Verbundplatten gemäß Fig. 1 und 2 erfolgen.

Die Erfindung ermöglicht die Herstellung von Bauteilen beliebiger Geometrien aus vorgefertigten Standardelementen (Einzelbauteilen) aus hochfestem oder ultrahochfestem Beton, ohne dass dafür aufwändige Schalungen herzustellen sind, die jeweils erst nach Aushärten des Betons für das nächste Element wieder verwendet werden können. Einzelbauteileim Sinne der Erfindung sind somit insbesondere Bauteile, die auf herkömmliche Art und Weise mittels geeigneten Schalungen und Formen aus Frischbeton hergestellt sind. Insbesondere können zur Herstellung des erfindungsgemäßen Verbundwerkstoffs z.B. standardisierte Betonplatten aus hochfestem oder ultrahochfestem Beton wirtschaftlich in einer Umlaufanlage produziert werden. Die Betonherstellung erfährt dadurch einen erhöhten Automatisierungsgrad.

Die erfindungsgemäßen Verbundplatten 1 eignen sich beispielsweise hervorragend zur Herstellung von ruhenden Schwimmkörpern, die üblicherweise z.B. für Bootsanleger oder Pontons, schwimmende Häuser aus Metall gefertigt werden. Zur Vermeidung von Korrosion müssen diese Schwimmkörper zwecks Beschichtung regelmäßig aus dem Wasser gehoben werden. Neben den eigentlichen Arbeiten wie Entrosten, Grundieren und Beschichten sind also auch noch aufwändige Hebe- und Transportvorgänge erforderlich. Hochfester bzw. ultrahochfester Beton dagegen ist wartungsfrei und bei Rissfreiheit wasserdicht, so dass ein aus den erfindungsgemäßen Verbundplatten 1 hergestellter Schwimmkörper ebenfalls wartungsfrei ist. Außerdem ist der Schwimmkörper sehr leicht und kann, insbesondere im Verhältnis zu seinem geringen Eigengewicht, sehr hohe Lasten aufnehmen, ohne zu Versinken. Zudem ist ein aus den erfindungsgemäßen Verbundplatten 1 hergestellter Schwimmkörper unempfindlich gegen Anprall von Schiffen oder dergleichen. Denn wenn ein Anprall erfolgt, werden - je nach Intensität - nur die außen liegenden Einzelplatten 2 reißen, wobei die Klebstoffschichten 3 gegen Wasser abdichten. Mit ausreichend dimensionierten Platten 1 aus dem erfindungsgemäßen Verbundwerkstoff können also sichere Schwimmkörper mit hohem Anprallschutz auf einfache Art durch Verkleben der einzelnen Verbundplatten 1 hergestellt werden.

Aus den erfindungsgemäßen Verbundplatten 1 können zudem Maschinenbauteile, z.B. Maschinenbetten oder Werkzeuggestelle oder Formteile hergestellt werden.

Die Verbundbalken 13 können beispielsweise als lastenübertragende Bauteile und/oder Aussteifungen oder Abstandshalter verwendet werden.

Des Weiteren können auch Massenbauteile aus dem erfindungsgemäßen Verbundwerkstoff hergestellt werden. Dabei vorhandene übliche Probleme wie hohe Hydratationswärmeentwicklung und Schwinden und/oder Verformungen werden dadurch vermieden.

Auch in Bezug auf Nachhaltigkeit sind aus dem erfindungsgemäßen Verbundwerkstoff hergestellte Bauteile vorteilhaft, da sehr dünne Bauteile herstellbar sind. Dadurch wird der Zementbedarf gesenkt.

Im Rahmen der Erfindung liegt es zudem auch, dass die Klebstofflagen zwischen den Einzelbauteilen nicht zwingend durchgehend, flächig ausgebildet sind, sondern z.B. aus mehreren Klebepunkten und/oder Klebestreifen besteden. Außerdem können z.B. zwischen zwei erfindungsgemäßen Verbundbauteilen, insbesondere zwei Verbundplatten, Zwischenbereiche angeordnet werden, die energieumwandelnde Materialien zur Aufnahme kurzzeitdynamischer Belastung enthalten. Dadurch werden impaktresistente Schichtbetonkonstruktionen gebildet. Auch können durch gezielte Wahl und Anordnung der Verbundbeuteile, insbesondere der Verbundplatten und/oder Verbundbalken, bevorzugt plattenförmige, Bauelemente mit Hohlräumen geschaffen werden, die z.B. als Vakuumkammern für erhöhte Wärmeisolierung oder zur Aufnahme von Ver- bzw. Entsorgungsleitungen nutzbar sind.

Im Rahmen der Erfindung liegt es wie bereits erläutert einerseits, dass die einzelnen Einzelbauteile, insbesondere die Einzelbretter und/oder die Einzelplatten, raumformmäßig und/oder bezüglich ihrer mechanischen Eigenschaften nicht alle gleich sein müssen. Infolgedessen können die einzelnen Einzelbauteile, insbesondere die Einzelbretter und/oder die Einzelplatten, eines Verbundwerkstoffes bzw. eines Verbundbauteils auch jeweils eine andere Zusammensetzung haben. Beispielsweise kann lediglich ein Teil der Einzelbauteile bewehrt sein. Oder die Bindemittelmischung kann variieren. Beispielsweise weisen lediglich die Einzelbauteile eine Bewehrung auf, die bei der späteren Verwendung auf Zug belastet sind. Außerdem kann ein flächiges Verbundbauteil z.B. sowohl Einzelbretter als auch Einzelplatten aufweisen. Eine Schicht aus dem erfindungsgemäßen Festbeton kann dann z.B. mehrere nebeneinander angeordnete Einzelbretter und/oder Einzelplatten aufweisen, die bevorzugt Stoß an Stoß aneinander gesetzt sind.

Außerdem können auch die einzelnen Klebeschichten eines Verbundwerkstoffes bzw. eines Verbundbauteils selbstverständlich bezüglich ihrer Raumform und/oder ihrer Zusammensetzung und/oder ihrer mechanischen Eigenschaften unterschiedlich aufgebaut sein. Beispielsweise kann wiederum lediglich ein Teil der Klebeschichten eine Bewehrung aufweisen.

## Patentansprüche

1. Verbundwerkstoff aus mehreren, insbesondere zumindest drei, miteinander fest verbundenen Einzelbauteilen (2;10;14) aus hochfestem oder ultrahochfestem Festbeton mit einer Zylinderdruckfestigkeit nach DIN EN 12390 ≥ 55 N/mm², wobei die Einzelbauteile (2;10;14) miteinander mittels eines Klebstoffes verklebt sind.

2. Verbundwerkstoff nach Anspruch 1,
**dadurch gekennzeichnet, dass**
die Zylinderdruckfestigkeit nach DIN EN 12390 des Festbetons ≥ 100 N/mm², bevorzugt ≥ 130 N/mm² ist.

3. Verbundwerkstoff nach Anspruch 1 oder 2,
**dadurch gekennzeichnet, dass**
die Biegezugfestigkeit nach DIN EN 12390 des Festbetons ≥ 5 N/mm², bevorzugt ≥ 10 N/mm² beträgt.

4. Verbundwerkstoff nach einem der vorhergehenden Ansprüche,
**dadurch gekennzeichnet, dass**
der E-Modul nach DIN EN 12390 des Festbetons 40.000 bis 60.000 N/mm², bevorzugt 45.000 bis 55.000 N/mm² beträgt.

5. Verbundwerkstoff nach einem der vorhergehenden Ansprüche,
**dadurch gekennzeichnet, dass**
der Verbundwerkstoff ein Schichtverbundwerkstoff ist, der mehrere flächige Einzelbauteile (2;14), insbesondere Einzelplatten (2) und/oder Einzelbretter (14) aufweist, die breitseitig miteinander verklebt sind.

6. Verbundwerkstoff nach einem der vorhergehenden Ansprüche,
**dadurch gekennzeichnet, dass**
der Festbeton der Einzelbauteile (2;10;14) ein hydraulisch erhärtetes Gemisch aus Zement, Gesteinskörnung, Anmachwasser, Betonzusatzmitteln, insbesondere Hochleistungsfließmitteln in Form von Polycarboxylaten, und bevorzugt Betonzusatzstoffen ist, wobei das Gemisch als Zusatzstoff vorzugsweise Puzzolane und/oder kurze oder endlose Fasern enthält.

7. Verbundwerkstoff nach einem der vorhergehenden Ansprüche,
**dadurch gekennzeichnet, dass**
der Festbeton eine Bewehrung, insbesondere in Form von Fasern, Filamenten, Garnen, Drähten, Geweben, Gewirken und/oder Stäben, aufweist.

8. Verbundwerkstoff nach einem der vorhergehenden Ansprüche,
**dadurch gekennzeichnet, dass**
der Festbeton ein hydraulisch erhärteter Beton ist, der unter Verwendung eines mineralischen, hydraulisch erhärtenden Bindemittels hergestellt ist, wobei das Bindemittel vorzugsweise ein mineralisches, hydraulisches Bindemittel auf Basis von zumindest einem Zement ist, wobei der Zement Klinkerphasen wie insbesondere C₃S, C₂S, C₃A, C₄AF sowie vorzugsweise Nebenbestandteile aufweist, die mit Wasser zu Zementstein erhärtende Hydratphasen, insbesondere Calciumsilikathydratphasen bilden, und wobei der Zement nach dem Anmachen mit Wasser eine Ruhephase von mindestens 6 bis 8 Stunden aufweist, in der keine beachtlichen Erhärtungsreaktionen stattfinden, wobei das Bindemittels zusätzlich mindestens eine feinteilige SiO₂-Komponente und mindestens eine feinteilige CaO-Komponente aufweist, die mit Anmachwasser während der Ruhephase aufgrund einer puzzolanischen Reaktion erhärtende, eine Frühfestigkeit bewirkende Galciumsilikathydratphasen bilden.

9. Verbundwerkstoff nach einem der vorhergehenden Ansprüche,
**dadurch gekennzeichnet, dass**
der Klebstoff ein organischer Klebstoff oder ein Silikon-Klebstoff oder ein mineralischer, hydraulisch abbindender Klebstoff oder eine Kombination aus vorgenannten Klebstoffen ist.

10. Verbundwerkstoff nach einem der vorhergehenden Ansprüche,
**dadurch gekennzeichnet, dass**
der E-Modul des Klebstoffes 500 bis 15.000 N/mm², bevorzugt 3.000 bis 5.000 N/mm² beträgt.

11. Verbundbauteil bzw. Verbundelement aus einem Verbundwerkstoff gemäß einem der vorhergehenden Ansprüche.

12. Verbundbauteil nach Anspruch 11,
**dadurch gekennzeichnet, dass**
das Verbundbauteil eine Verbundplatte (1) ist, die mehrere Einzelplatten (2) aufweist, die jeweils breitseitig miteinander mittels einer zwischen je zwei Einzelplatten (2) liegenden Klebstoffschicht bzw. Klebsofflage (3) verklebt sind.

13. Verbundbauteil, nach Anspruch 11,
**dadurch gekennzeichnet, dass**
das Verbundbauteil ein Verbundbalken (13) ist, der mehrere Einzelbretter (14) aufweist, die jeweils breitseitig miteinander mittels einer zwischen je zwei Einzelbrettern (14) liegenden Klebstoffschicht bzw. Klebstofflage (15) verklebt sind.

14. Verbundbauteil nach Anspruch 12 oder 13,
**dadurch gekennzeichnet, dass**
die Klebeschichten eine Bewehrung in Form von einer oder mehreren Gewebe- und/oder Gewirkelagen aus Glas- und/oder Metall- und/oder Kunststoff- und/oder Kohlenstofffasern und/oder in Form von Glas-und/oder Metall- und/oder Kunststoff- und/oder Kohlenstoffeinzelfasern oder - filamenten aufweisen.

15. Verbundbauteil nach einem der vorhergehenden Ansprüche,
**dadurch gekennzeichnet, dass**
die einzelnen Schichten planmäßig ein unterschiedliches Festigkeitsniveau zur Erzielung besonderer mechanischer Effekte im Gesamtsystem aufweisen.

16. Schwimmkörper aufweisend zumindest ein Verbundbauteil gemäß einem der Ansprüche 11 bis 15.

17. Impaktresistente Schichtbetonkonstruktion aufweisend zumindest zwei Verbundbauteile gemäß einem der Ansprüche 11 bis 15

18. Bauelement mit Vakuumkammern zu Isolationszwecken und/oder mit Ver- bzw. Entsorgungskanälen aufweisend zumindest ein Verbundbauteil gemäß einem der Ansprüche 11 bis 15.

19. Verfahren zur Herstellung eines Verbundwerkstoffs,
**dadurch gekennzeichnet, dass**
der Verbundwerkstoff mehrere, insbesondere zumindest drei, miteinander fest verbundene Einzelbauteile (2;10;14) aus hochfestem oder ultrahochfestem Festbeton mit einer Zylinderdruckfestigkeit nach DIN EN 12390 ≥ 55 N/mm² aufweist, wobei die Einzelfestbetonbauteile (2;10;14) miteinander mittels eines Klebstoffes verklebt werden.
